# EUROPÄISCHE PATENTSCHRIFT

(11) **EP 1 382 561 B1**
(45) Veröffentlichungstag und Bekanntmachung des Hinweises auf die Patenterteilung: **05.04.2006**
(21) Anmeldenummer: 03012115.6
(22) Anmeldetag: 30.05.2003
(51) Int. Cl.: B66F 9/07, B65G 1/04

(54) **Regalfahrzeug zum Ein- und Auslagern von Papierrollen**
Shelf stacking machine for storing and destoring paper rolls
Gerbeur pour stocker et déstocker des rouleaux de papier

(30) Priorität: 10.07.2002 DE 20210657 U
(43) Veröffentlichungstag der Anmeldung: 21.01.2004
(73) Patentinhaber: Westfalia Logistics Technologies GmbH & Co. KG, 33829 Borgholzhausen (DE)
(72) Erfinder: Upmeyer, Ulrich, 33829 Borgholzhausen (DE)
(74) Vertreter: Philipp, Matthias

(56) Entgegenhaltungen:
- DE-U- 20 206 372
- US-A- 5 096 355
- PATENT ABSTRACTS OF JAPAN vol. 1999, no. 13, 30. November 1999 (1999-11-30) & JP 11 208815 A (NIPPON YUSOKI CO LTD), 3. August 1999 (1999-08-03)

## Beschreibung

Die Erfindung betrifft ein Regalfahrzeug zum Ein- und Auslagern von Papierrollen, insbesondere in der Druckindustrie, das in einer Regalgasse zwischen Lagerregalen mit übereinander und in Gassenlängsrichtung hintereinander in Lagerkanälen angeordneten Lagerplätzen verfahrbar ist, und mit einer in Gassenquerrichtung ausfahrbaren Aufnahmeeinrichtung für eine liegende Papierrolle.

Derartige gattungsgemäße Regalfahrzeuge sind bspw. aus dem deutschen Gebrauchsmuster DE 299 03 671.5 und dem deutschen Gebrauchsmuster DE 201 05 388.8 bekannt geworden. Bei den bekannten Regalfahrzeugen sind Aufnahme- bzw. Teleskopgabeln vorgesehen, mit denen liegende Papierrollen einfach tief aus einem Lagerkanal ein- und ausgelagert werden können.

Ferner sind Regalfahrzeuge bekannt, denen ein Lagerfahrzeug zugeordnet ist, mit dem liegende Papierrollen in einen Lagerkanal ein- und ausgelagert werden können.

Das Dokument US 5 096 355, welches dem Oberbegriff des unabhängigen Anspruch 1 entspricht, offenbart ein Hochregallager zum Ein- und Auslagern von Papierrollen in liegender Stellung, das eine Anzahl von Regalfächern aufweist, denen die einzelnen Papierrollen mittels Verschiebewagen und auf diesen angeordneten, quer zur Verschiebewagenlängsrichtung verlaufenden Papierrollentransportwagen zugeführt werden. Die Verschiebewagen müssen allerdings über einen zentralen Aufzug in eine gewünschte Regalebene transportiert werden. Dies ist zeit- und kostenaufwendig.

Vorzugsweise werden Regalfahrzeuge mit Teleskopaufnahme in der Druckindustrie für die Tageslagerung an der Druckmaschine eingesetzt, wobei eine liegende Papierrolle mit einer Teleskopgabel an Rollenwagen einer zuführenden Fördertechnik für die Druckmaschine abgegeben werden können. Im Unterschied dazu werden die bekannten Regalfahrzeuge mit zugeordnetem Lagerfahrzeug für die Wochenlagerung der Papierrollen in sogenannten Blocklagern eingesetzt.

Die Aufgabe der Erfindung besteht darin, ein Regalfahrzeug bereitzustellen, mit dem Tages- und Wochenlager kombiniert werden können und ein gemeinsames Regalfahrzeug für beide Lageraufgaben (Hochregallager und Rollenwagen) genutzt werden kann.

Diese Aufgabe wird erfindungsgemäß bei einem gattungsgemäßen Regalfahrzeug dadurch gelöst, daß das Regalfahrzeug in Gassenquerrichtung angeordnete Aufnahmeschienen aufweist, in denen ein in den Lagerkanälen verfahrbares Lagerfahrzeug (12) aufnehmbar ist, wobei das Regalfahrzeug zusätzlich mit einer in Gassenquerrichtung ausfahrbaren Aufnahme enrichtung für eine liegende Papierolle verschen ist.

Diese Lösung ermöglicht eine beliebige Ein- und Auslagerung und Übergabe zwischen Lagerkanal (Tages- oder Wochenlager), Lagerfahrzeug und Rollenwagen mit einem einzigen Regalfahrzeug.

Bevorzugt ist die Aufnahmeeinrichtung durch eine Teleskopaufnahme gebildet.

Zweckmäßigerweise sieht die Erfindung vor, daß die Aufnahmeeinrichtung bzw. Teleskopaufnahme in Ausrichtung mit den Aufnahmeschienen angeordnet ist, und weiter, daß die Aufnahmeeinrichtung oberhalb der Aufnahmeschienen angeordnet ist, um eine problemlose Übergabe einer Papierrolle zwischen Aufnahmeeinrichtung und Lagerfahrzeug zu ermöglichen.

Bevorzugt ist vorgesehen, daß die Aufnahmeeinrichtung beidseitig in Gassenquerrichtung ausfahrbar ist. In entsprechender Weise kann vorgesehen sein, daß die Aufnahmeschienen zur Aufnahme und Abgabe eines Lagerfahrzeugs in beiden Richtungen quer zur Gassenlängsrichtung ausgelegt sind.

Das Regalfahrzeug kann eine Fahreinheit mit einer daran höhenverfahrbar gelagerten Hubeinheit aufweisen, wobei Aufnahmeschienen und Teleskopaufnahme an der Hubeinheit angeordnet sind. Die Fahreinheit kann ein portalartiges, U-förmiges Gestell mit zwei vertikalen Ständern aufweisen, an denen motorisch angetriebene Fahrwerke angeordnet sind. Weiterhin kann die Hubeinheit einen Hubrahmen und einen daran um eine horizontale Achse gesteuert schwenkbar gelagerten Fahrrahmen aufweisen, wobei Aufnahmeschienen und Aufnahmeeinrichtung an dem Fahrrahmen angeordnet sind.

Bevorzugt weist die Aufnahmeeinrichtung zwei gabelartige, parallel und mit gegenseitigem Abstand angeordnete Aufnahmeschenkel auf.

Jeder Aufnahmeschenkel kann eine abschnittsweise zylindermantelförmige Aufnahmefläche, aufweisen.

Zweckmäßigerweise ist der vertikale Abstand zwischen Aufnahmeeinrichtung und Aufnahmeschienen veränderbar, um eine Übergabe von Papierrollen unterschiedlichen Durchmessers zu vereinfachen. Hierbei ist bevorzugt vorgesehen, daß die Aufnahmeeinrichtung relativ zu den Aufnahmeschienen anheb- und absenkbar ist.

Die Aufnahmeschenkel können in ihrem gegenseitigen Abstand verstellbar sein, um die Aufnahme von Papierrollen unterschiedlichen Durchmessers zu vereinfachen.

Es kann vorgesehen sein, daß dem Regalfahrzeug ein Lagerfahrzeug zum Aufnehmen und Übergeben von Papierrollen zugeordnet ist. Das Lagerfahrzeug kann energie- und/oder steuerungsmäßig an das Regalfahrzeug angebunden sein. Ferner kann das Lagerfahrzeug eine höhenverstellbare Aufnahmevorrichtung für liegende Papierrollen aufweisen, die eine abschnittsweise zylindermantelförmige Aufnahmefläche aufweisen kann. Das Lagerfahrzeug kann ferner einen Hubantrieb für die Aufnahmevorrichtung und einen auf Antriebsräder wirkenden Fahrantrieb aufweisen.

Weitere Vorteile und Merkmale der Erfindung ergeben sich aus der nachfolgenden Beschreibung eines Ausführungsbeispiels, wobei auf eine Zeichnung Bezug genommen ist, in der
Fig. 1 eine Vorderansicht einer Hubeinheit eines erfmdungsgemäßen Regalfahrzeugs zeigt, wobei eine Papierrolle von einem Lagerfahrzeug aufgenommen ist;
Fig. 2 eine Seitenansicht der Hubeinheit nach Fig. 1 mit einem teilweise ausgefahrenen, mit einer Papierrolle beladenen Lagerfahrzeug zeigt;
Fig. 3 eine Draufsicht auf die Hubeinheit nach Fig. 2 zeigt;
Fig. 4 eine Vorderansicht entsprechend Fig. 1 zeigt, wobei eine Papierrolle von einer Teleskopaufnahme des Regalfahrzeugs aufgenommen ist;
Fig. 5 einen Ausschnitt aus Fig. 1 bzw. Fig. 4 in vergrößertem Maßstab zur Erläuterung der Aufnahme von Papierrollen unterschiedlichen Durchmessers zeigt;
Fig. 6 eine Ansicht ähnlich Fig. 2 zur Erläuterung der Übergabe einer Papierrolle von der Teleskopaufnahme auf einen Rollenwagen zeigt;
Fig. 7 eine Draufsicht auf die Hubeinheit nach Fig. 6 zeigt;
Fig. 8 eine Vorderansicht eines Teils eines erfindungsgemäßen Regalfahrzeugs zeigt, mit einer Hubeinheit entsprechend Fig. 4; und
Fig. 9 eine Seitenansicht eines erfindungsgemäßen Regalfahrzeugs gemäß Fig. 8 in Gassenlängsrichtung zeigt, mit beiderseits angedeuteten Lagerregalen und Lagerplätzen für Papierrollen.

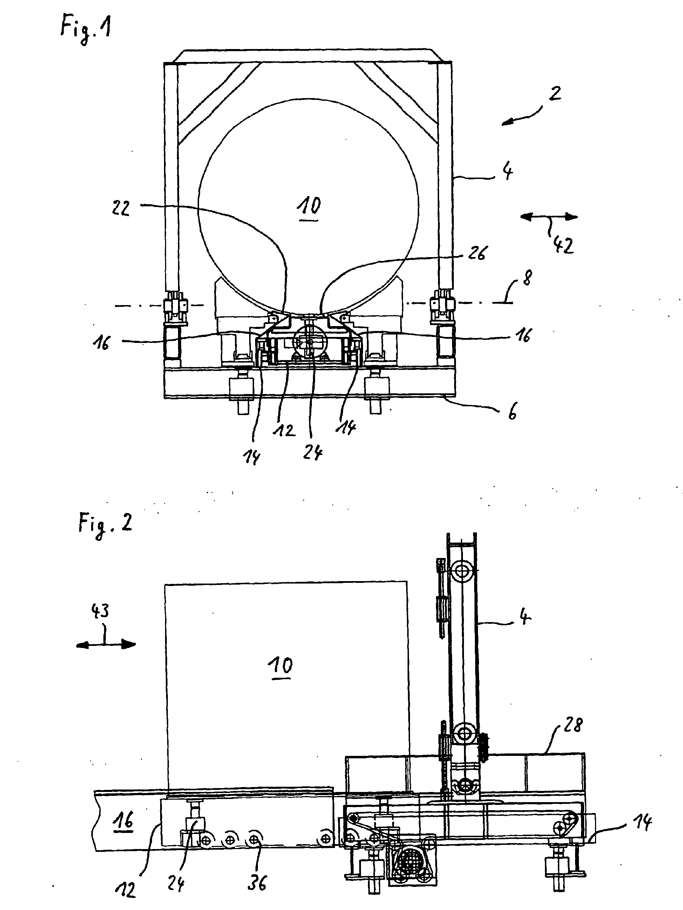

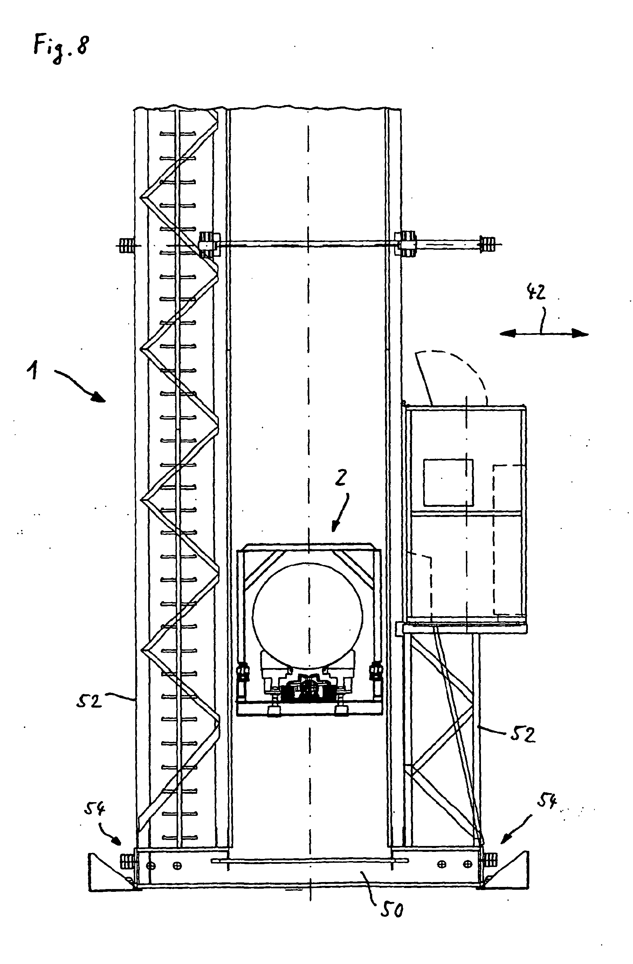

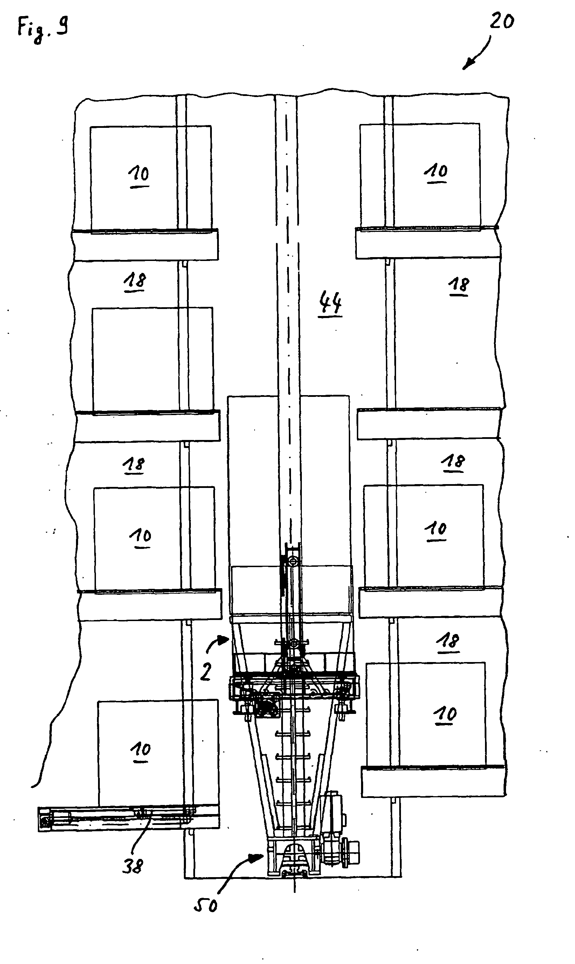

Zunächst sei auf Fig. 1 bis 3 bezug genommen, die eine Hubeinheit eines erfindungsgemäßen Regalfahrzeugs zeigen, die an einer Fahreinheit eines in Fig. 8 und 9 erläuterten Regalfahrzeugs 1 höhenverstellbar gelagert ist. Die im ganzen mit 2 bezeichnete Hubeinheit weist einen umgekehrt U-förmigen Hubrahmen 4 auf, an dem ein Fahrrahmen 6 um eine horizontale Schwenkachse 8 schwenkbar gelagert ist. Eine Steuerung um die Schwenkachse 8 dient in an sich bekannter Weise der exakt horizontalen Ausrichtung einer auskragend auf dem Hubrahmen 4 gehaltenen Papierrolle 10 mittels entsprechender Lagererfassungs- und Steuerungseinrichtungen.

Fig. 1 bis 3 zeigen eine Situation, in der das Regalfahrzeug bzw. dessen Hubeinheit 2 eine liegende Papierrolle 10 mittels eines Lagerfahrzeugs 12 aufnimmt oder abgibt, wobei das Lagerfahrzeug 12 innerhalb des Fahrrahmens 6 auf Aufnahmeschienen 14 horizontal verfahrbar ist und andererseits in Regalschienen 16 eines Lagerkanals 18 (Fig. 9) eines Lagerregals 20 verfahrbar ist, um eine Papierrolle ein- bzw. auszulagem.

Jeder Lagerkanal 18 ist in an sich bekannter Weise mit paarweise angeordneten Regalschienen 16 und darauf oder darüber befindlichen Auflageflächen 22 versehen, die der Aufnahme einer liegenden Papierrolle 10 in schonender Weise dienen, wobei das Lagerfahrzeug 12 eine möglichst geringe Bauhöhe aufweist, damit die Lagerkanäle 18 einen möglichst geringen vertikalen Abstand voneinander aufweisen können.

Das Lagerfahrzeug 12 weist einen Hubantrieb 24 für eine höhenverstellbare Aufnahmevorrichtung 26 mit Aufnahmeflächen 27 für liegende Papierrollen auf, wobei der vertikale Verstellbereich der Aufnahmevorrichtung 26 so bemessen ist, daß eine Papierrolle von den Auflageflächen 22 eines Lagerkanals abgehoben werden kann, wie Fig. 1 zeigt, und an das Regalfahrzeug übergeben werden kann.

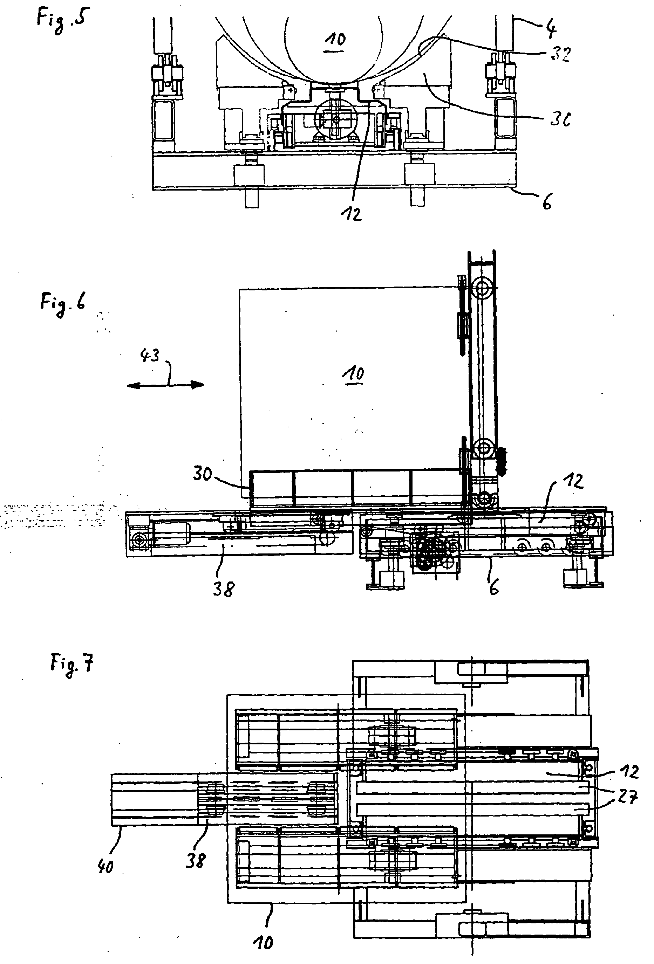

Zur Übernahme der von dem Lagerfahrzeug herantransportierten Papierrolle ist erfindungsgemäß in der Hubeinheit eine als Teleskopaufnahme 28 ausgestaltete Aufnahmeeinrichtung vorgesehen, die zwei gabelartige, parallel zueinander und mit gegenseitigem Abstand angeordnete Aufnahmeschenkel 30 aufweist, von denen jeder eine abschnittsweise zylindermantelförmige Aufnahmefläche 32 aufweist. Die Aufnahmefläche 32 kann abschnittsweise aus zylindermantelförmigen Abschnitten mit unterschiedlichen Radien bestehen, um Papierrollen mit unterschiedlichen Radien möglichst schonen aufnehmen zu können. Dies ist in Fig. 5 erläutert. Weiter kann vorgesehen sein, daß der gegenseitige Abstand der Aufnahmeschenkel einstellbar ist, um die Aufnahme unterschiedlich großer Papierrollen zu erleichtern.

Insbesondere sieht die Erfindung vor, daß der vertikale Abstand zwischen den Aufnahmeschienen 14 für das Lagerfahrzeug 12 und der Teleskopaufnahme 28 bzw. den Aufnahmeschenkeln 30 veränderbar ist, wobei dies bevorzugt dadurch erreicht wird, daß die Aufnahmeschenkel 30 höhenverstellbar an dem Fahrrahmen 6 gehalten sind. Die Höhenverstellbarkeit der Teleskopaufnahme ist deshalb von Bedeutung, weil das Lagerfahrzeug 12 nur einen relativ geringen vertikalen Hub aufweist, um, wie erläutert, den vertikalen Abstand der Lagerkanäle 18 in einem Lagerregal möglichst gering zu halten. Um dennoch Papierrollen unterschiedlichen Durchmessers von einem Lagerfahrzeug an die Teleskopaufnahme übergeben zu können bzw. umgekehrt, ist es zweckmäßig, wenn die Teleskopaufnahme vertikal verfahrbar ist.

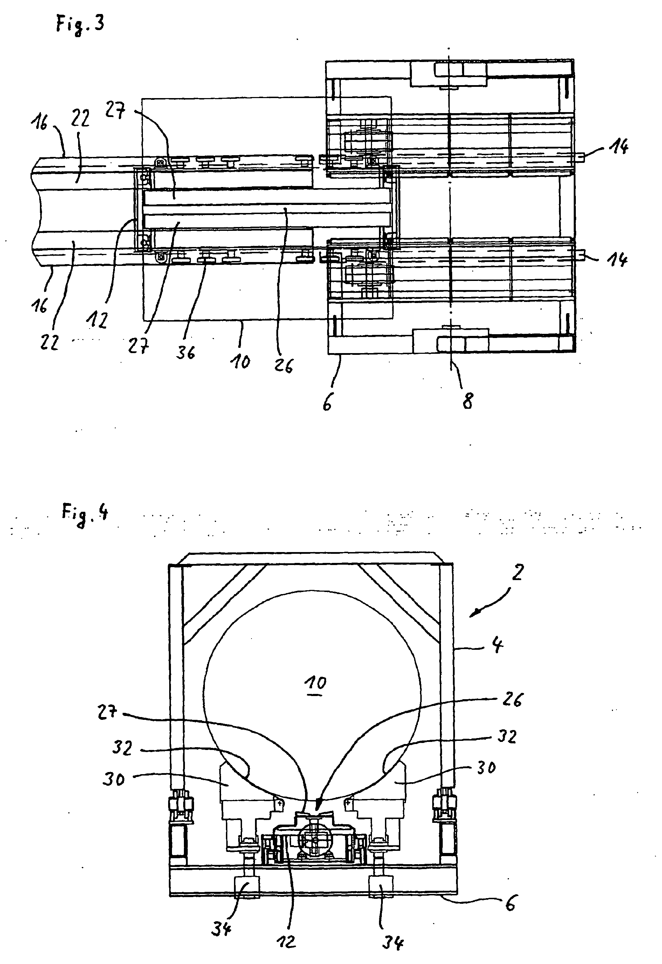

Fig. 4 zeigt eine angehobene Position der Aufnahmeschenkel 30, wobei zwei den Aufnahmeschenkeln 30 zugeordnete Hubantriebe 34 für eine deutlich größere vertikale Verlagerung der Papierrolle 10 sorgen, als dies allein mit dem Hubantrieb 24 eines Lagerfahrzeugs 12 möglich wäre.

Fig. 2 zeigt die Hubeinheit 2 in Seitenansicht, wobei Hubrahmen 4 und Fahrrahmen 6 sowie die Teleskopaufnahme 28 deutlich erkennbar sind. Ein Lagerfahrzeug 12 befindet sich mit einer darauf aufgenommenen Papierrolle 10 größtenteils außerhalb des Fahrrahmens 6 und innerhalb bzw. auf Regalschienen 16, wobei das Lagerfahrzeug auf Laufrädern 36 läuft.

Fig. 3 zeigt Auflageflächen 22 eines Lagerkanals 18, dem Regalschienen 16 zugeordnet sind, sowie die Aufnahmevorrichtung 26 des Lagerfahrzeugs 12, auf deren Aufnahmeflächen 27 die Papierrolle 10 ruht.

Fig. 4, 6 und 7 erläutern die Abgabe bzw. Übernahme einer Papierrolle 10 an einen bzw. von einem Rollenwagen 38 einer Fördertechnik, mit der die Papierrolle an eine Druckmaschine (nicht dargestellt) weiterbefördert wird. Bei dieser Abgabe bzw. Übernahme verbleibt das Lagerfahrzeug 12 innerhalb des Fahrrahmens 6, wie Fig. 6 und 7 zeigen, während die Papierrolle 10 auf den angehobenen Aufnahmeschenkeln 30 der Teleskopaufnahme 28 ruht. Da der Rollenwagen 38 nur bis in die in Fig. 6 und 7 gezeigte Stellung am Ende seiner Fahrschienen 40 fahren kann, fahren die Aufnahmeschenkel 30 in Gassenquerrichtung (Pfeil 43) seitlich, d.h. in einer zu einer Gassenlängsrichtung 42 einer Regalgasse 44 (Fig. 8 und 9) senkrechten Richtung aus (Fig. 6 und 7) und übergeben bzw. übernehmen eine Papierrolle 10 durch Absenken auf den bzw. Anheben von dem Rollenwagen 38.

Fig. 8 zeigt eine Vorderansicht, d.h. eine Ansicht senkrecht zur Gassenlängsrichtung 42 (und Verfahrrichtung innerhalb einer Regalgasse 44, Fig. 9) eines unteren Abschnitts eines Regalfahrzeugs 1, dessen Fahreinheit 50 ein U-förmiges Gestell mit zwei senkrechten Ständern 52 aufweist, an deren unteren Enden ein motorisch angetriebenes Fahrwerk 54 angeordnet ist. Das Fahrwerk läuft in an sich bekannter Weise mit Tragrädern auf Tragschienen (nicht dargestellt), die auf einem Hallenboden o.ä. des Lagerregals 20 angeordnet sind. An seinem oberen, nicht dargestellten Endabschnitt ist die Fahreinheit 50 in ebenfalls an sich bekannter Weise seitlich an Führungsrädern geführt.

Zwischen und an den Ständern 52 ist die Hubeinheit 2 vertikal verfahrbar gelagert, um den Fahrrahmen 6 in eine einem ausgewählten Lagerkanal 18 entsprechende Höhe zu bringen, so daß das Lagerfahrzeug 12 aus dem Fahrrahmen 6 heraus und in den Lagerkanal 18 bzw. dessen Regalschienen 16 einfahren kann, um eine Papierrolle ein- oder auszulagern. Die Lagerkanäle 18 können hierbei durchaus unterschiedlichen vertikalen Abstand haben, um bspw. vornehmlich der Aufnahme größerer oder kleinerer Papierrollen zu dienen, wie Fig. 9 zeigt.

### Bezugszeichenliste

- 1: Regalfahrzeug
- 2: Hubeinheit
- 4: Hubrahmen
- 6: Fahrrahmen
- 8: Schwenkachse
- 10: Papierrolle
- 12: Lagerfahrzeug
- 14: Aufnahmeschienen (von 6)
- 16: Regalschienen
- 18: Lagerkanal
- 20: Lagerregal
- 22: Auflagefläche (von 16)
- 24: Hubantrieb (von 12)
- 26: Aufnahmevorrichtung (von 12)
- 27: Aufnahmefläche (von 26)
- 28: Teleskopaufnahme
- 30: Aufnahmeschenkel (von 28)
- 32: Aufnahmefläche (von 30)
- 34: Hubantrieb (von 30)
- 36: Laufräder (von 12)
- 38: Rollenwagen
- 40: Fahrschienen (von 38)
- 42: Gassenlängsrichtung
- 43: Gassenquerrichtung
- 44: Regalgasse
- 50: Fahreinheit
- 52: Ständer
- 54: Fahrwerk
- 56: Lagerplatz

## Patentansprüche

1. Regalfahrzeug (1) zum Ein- und Auslagern von Papierrollen (10), insbesondere in der Druckindustrie, das in einer Regalgasse (44) zwischen Lagerregalen (20) mit übereinander und in Gassenlängsrichtung (42) hintereinander in Lagerkanälen (18) angeordneten Lagerplätzen (56) verfahrbar ist, mit in Gassenquerrichtung angeordneten Aufnahmeschienen (14) für ein in den Lagerkanälen (18) verfahrbares Lagerfahrzeug (12), **dadurch gekennzeichnet, daß** das Regalfahrzeug zusätzlich mit einer in Gassenquerrichtung (43) ausfahrbaren Aufnahmeeinrichtung (28) für eine liegende Papierrolle (10) versehen ist.

2. Regalfährzeug nach Anspruch 1, **dadurch gekennzeichnet, daß** die Aufnahmeeinrichtung durch eine Teleskopaufnahme (28) gebildet ist.

3. Regalfahrzeug nach Anspruch 1 oder 2, **dadurch gekennzeichnet, daß** die Aufnahmeeinrichtung (28) in Ausrichtung mit den Aufnahmeschienen (14) angeordnet ist.

4. Regalfahrzeug nach einem der Ansprüche 1, 2 oder 3, **dadurch gekennzeichnet, daß** die Aufnahmeeinrichtung (28) oberhalb der Aufnahmeschienen (14) angeordnet ist.

5. Regalfahrzeug nach einem der vorangehenden Ansprüche, **dadurch gekennzeichnet, daß** die Aufnahmeeinrichtung (28) beidseitig in Gassenquerrichtung ausfahrbar ist.

6. Regalfahrzeug nach einem der vorangehenden Ansprüche, **dadurch gekennzeichnet, daß** die Aufnahmeschienen (14) zur Aufnahme und Abgabe eines Lagerfahrzeugs (12) in beiden Richtungen quer zur Gassenlängsrichtung (42) ausgelegt sind.

7. Regalfahrzeug nach einem der vorangehenden Ansprüche, **dadurch gekennzeichnet, daß** das Regalfahrzeug eine Fahreinheit (50) mit einer daran höhenverfahrbar gelagerten Hubeinheit (2) aufweist, wobei Aufnahmeschienen (14) und Aufnahmeeinrichtung (28) an der Hubeinheit (2) angeordnet sind.

8. Regalfahrzeug nach Anspruch 7, **dadurch gekennzeichnet, daß** die Fahreinheit (50) ein portalartiges, U-förmiges Gestell mit zwei vertikalen Ständern (52) aufweist, an denen ein motorisch angetriebenes Fahrwerk (54) angeordnet ist.

9. Regalfahrzeug nach Anspruch 7 oder 8, **dadurch gekennzeichnet, daß** die Hubeinheit (2) einen Hubrahmen (4) und einen daran um eine horizontale Schwenkachse (8) gesteuert schwenkbar gelagerten Fahrrahmen (6) aufweist, wobei Aufnahmeschienen (14) und Aufnahmeeinrichtung (28) an dem Fahrrahmen angeordnet sind.

10. Regalfahrzeug nach einem der vorangehenden Ansprüche, **dadurch gekennzeichnet, daß** die Aufnahmeeinrichtung (28) zwei gabelartige, parallel und mit gegenseitigem Abstand angeordnete Aufnahmeschenkel (30) aufweist.

11. Regalfahrzeug nach Anspruch 10, **dadurch gekennzeichnet, daß** jeder Aufnahmeschenkel (30) eine abschnittsweise zylindermantelförmige Aufnahmefläche (32) aufweist.

12. Regalfahrzeug nach einem der vorangehenden Ansprüche, **dadurch gekennzeichnet, daß** der vertikale Abstand zwischen Aufnahmeeinrichtung (28) und Aufnahmeschienen (14) veränderbar ist, um eine Übergabe von Papierrollen unterschiedlichen Durchmessers zu vereinfachen.

13. Regalfahrzeug nach Anspruch 12, **dadurch gekennzeichnet, daß** die Aufnahmeeinrichtung (28) relativ zu den Aufnahmeschienen (14) anheb- und absenkbar ist.

14. Regalfahrzeug nach einem der Ansprüche 10 bis 13, **dadurch gekennzeichnet, daß** die Aufnahmeschenkel (30) einen gegenseitigen Abstand aufweisen, der verstellbar ist.

15. Regalfahrzeug nach einem der vorangehenden Ansprüche, **dadurch gekennzeichnet, daß** dem Regalfahrzeug ein Lagerfahrzeug (12) zum Aufnehmen und Übergeben von Papierrollen (10) zugeordnet ist.

16. Regalfahrzeug nach Anspruch 15, **dadurch gekennzeichnet, daß** das Lagerfahrzeug (12) energie- und/oder steuerungsmäßig an das Regalfahrzeug (1) angebunden ist.

17. Regalfahrzeug nach einem der vorangehenden Ansprüche, **dadurch gekennzeichnet, daß** das Lagerfahrzeug (12) eine höhenverstellbare Aufnahmevorrichtung (26) für liegende Papierrollen (10) aufweist.

18. Regalfahrzeug nach Anspruch 17, **dadurch gekennzeichnet, daß** die Aufnahmevorrichtung (26) eine abschnittsweise zylindermantelförmige Aufnahmefläche (27) aufweist.

19. Regalfahrzeug nach einem der vorangehenden Ansprüche, **dadurch gekennzeichnet, daß** das Lagerfahrzeug (12) Laufräder (36), einen Hubantrieb (24) für die Aufnahmevorrichtung (26) und einen auf wenigstens eines der Laufräder (36) wirkenden Fahrantrieb aufweist.

## Claims

1. Shelf-stacking vehicle (1) for storing and retrieving rolls of paper (10), in particular in the printing industry, which shelf-stacking vehicle (1) can be moved in a shelf aisle (44) between storage shelves (20) having storage locations (56) arranged one on top of the other and in storage channels (18), one behind the other in the longitudinal direction (42) of the aisle, and has receiving rails (14), arranged in the transverse direction of the aisle, for a storage vehicle (12), which can be moved in the storage channels (18), **characterized in that** the shelf-stacking vehicle is also provided with a receiving device (28), which can be extended in the transverse direction (43) of the aisle, for a horizontal roll of paper (10).

2. Shelf-stacking vehicle according to Claim 1,
**characterized in that** the receiving device is formed by a telescopic receptacle (28).

3. Shelf-stacking vehicle according to Claim 1 or 2, **characterized in that** the receiving device (28) is arranged so as to be aligned with the receiving rails (14).

4. Shelf-stacking vehicle according to one of Claims 1, 2 or 3, **characterized in that** the receiving device (28) is arranged above the receiving rails (14).

5. Shelf-stacking vehicle according to one of the preceding claims, **characterized in that** the receiving device (28) can be extended on both sides in the transverse direction of the aisle.

6. Shelf-stacking vehicle according to one of the preceding claims, **characterized in that** the receiving rails (14) are designed so as to receive and deliver a storage vehicle (12) in both directions transversely with respect to the longitudinal direction (42) of the aisle.

7. Shelf-stacking vehicle according to one of the preceding claims, **characterized in that** the shelf-stacking vehicle has a travelling unit (50) having a lifting unit (2) which is mounted such that it can be moved vertically on said travelling unit (50), the receiving rails (14) and the receiving device (28) being arranged on the lifting unit (2).

8. Shelf-stacking vehicle according to Claim 7, **characterized in that** the travelling unit (50) has a portal-like, U-shaped frame having two vertical uprights (52), on which a motor-driven travelling mechanism (54) is arranged.

9. Shelf-stacking vehicle according to Claim 7 or 8, **characterized in that** the lifting unit (2) has a lifting frame (4) and a travelling frame (6) which is mounted on said lifting frame (4) such that it can pivot in a controlled manner about a horizontal pivoting axis (8), the receiving rails (14) and the receiving device (28) being arranged on the travelling frame.

10. Shelf-stacking vehicle according to one of the preceding claims, **characterized in that** the receiving device (28) has two fork-like receiving limbs (30) which are arranged parallel and at a distance from one another.

11. Shelf-stacking vehicle according to Claim 10, **characterized in that** each receiving limb (30) has a receiving face (32) which is in the form of a cylinder outer surface, in sections.

12. Shelf-stacking vehicle according to one of the preceding claims, **characterized in that** the vertical distance between the receiving device (28) and the receiving rails (14) can be changed in order to make it easier for rolls of paper having different diameters to be transferred.

13. Shelf-stacking vehicle according to Claim 12, **characterized in that** the receiving device (28) can be lifted and lowered in relation to the receiving rails (14).

14. Shelf-stacking vehicle according to one of Claims 10 to 13, **characterized in that** the receiving limbs (30) have a distance from one another which can be adjusted.

15. Shelf-stacking vehicle according to one of the preceding claims, **characterized in that** a storage vehicle (12) for receiving and transferring rolls of paper (10) is associated with the shelf-stacking vehicle.

16. Shelf-stacking vehicle according to Claim 15, **characterized in that** the storage vehicle (12) is connected to the shelf-stacking vehicle (1) in terms of power and/or control.

17. Shelf-stacking vehicle according to one of the preceding claims, **characterized in that** the storage vehicle (12) has a vertically adjustable receiving apparatus (26) for horizontal rolls of paper (10).

18. Shelf-stacking vehicle according to Claim 17, **characterized in that** the receiving apparatus (26) has a receiving face (27) which is in the form of a cylinder outer surface, in sections.

19. Shelf-stacking vehicle according to one of the preceding claims, **characterized in that** the storage vehicle (12) has running wheels (36), a lifting drive (24) for the receiving apparatus (26) and a traction drive acting on at least one of the running wheels (36).

## Revendications

1. Gerbeur (1) pour stocker et déstocker des rouleaux de papier (10), en particulier dans l'industrie de l'impression, le gerbeur étant déplaçable dans une ruelle de rayonnages (44), entre des rayonnages de stockage (20) comprenant des emplacements de stockage (56), disposés les uns au-dessus des autres et les uns derrière les autres, dans la direction longitudinale de ruelle (42), dans des canaux de stockage (18), avec des glissières support (14) disposées dans la direction transversale de la ruelle, pour un véhicule de stockage (12) déplaçable dans les canaux de stockage (18), **caractérisé en ce que** le gerbeur est en plus muni d'un dispositif support (28), déployable dans la direction transversale de ruelle (43), pour un rouleau de papier (10) horizontal.

2. Gerbeur selon la revendication 1, **caractérisé en ce que** le dispositif support est formé par un support télescopique (28).

3. Gerbeur selon la revendication 1 ou 2, **caractérisé en ce que** le dispositif support (28) est disposé dans l'orientation des glissières support (14).

4. Gerbeur selon l'une des revendications 1, 2 ou 3, **caractérisé en ce que** le dispositif support (28) est disposé au-dessus des glissières support (14).

5. Gerbeur selon l'une des revendications précédentes, **caractérisé en ce que** le dispositif support (28) est déployable, de part et d'autre, dans la direction transversale à la ruelle.

6. Gerbeur selon l'une des revendications précédentes, **caractérisé en ce que** les glissières support (14) sont conçues pour supporter et fournir un véhicule de stockage (12) dans les deux directions, transversalement par rapport à la direction longitudinale de ruelle (42).

7. Gerbeur selon l'une des revendications précédentes, **caractérisé en ce que** le gerbeur présente une unité de déplacement (50), avec une unité de levage (2), montée sur elle de façon à pouvoir être déplacée en hauteur, des glissières support (14) et des dispositifs support (28) étant disposés sur l'unité de levage (2).

8. Gerbeur selon la revendication 7, **caractérisé en ce que** l'unité de déplacement (50) présente un bâti en forme de U, du genre d'un portique, avec deux montants (52) verticaux sur lesquels est disposé un train de déplacement (54) entraîné de façon motorisée.

9. Gerbeur selon la revendication 7 ou 8, **caractérisé en ce que** l'unité de levage (2) présente un cadre de levage (4) et un cadre de déplacement (6), monté sur lui de façon à pouvoir pivoter de façon commandée autour d'un axe de pivotement (8) horizontal, des glissières support (14) et un dispositif support (28) étant disposés sur le cadre de déplacement.

10. Gerbeur selon l'une des revendications précédentes, **caractérisé en ce que** le dispositif support (28) présente deux branches support (30) du genre de fourches, disposées parallèlement et selon un espacement mutuel.

11. Gerbeur selon la revendication 10, **caractérisé en ce que** chaque branche support (30) présente une surface support (32) en forme d'enveloppe cylindrique par tronçons.

12. Gerbeur selon l'une des revendications précédentes, **caractérisé en ce que** l'espacement vertical, entre le dispositif support (28) et les glissières support (14), est modifiable pour simplifier un transfert de rouleaux de papier ayant des diamètres différents.

13. Gerbeur selon la revendication 12, **caractérisé en ce que** le dispositif support (28) est levable et abaissable par rapport aux glissières support (14).

14. Gerbeur selon l'une des revendications 10 à 13,
**caractérisé en ce que** les branches support (30) présentent un espacement mutuel qui est réglable.

15. Gerbeur selon l'une des revendications précédentes, **caractérisé en ce qu'**au gerbeur est associé un véhicule de stockage (12), pour supporter et transférer des rouleaux de papier (10).

16. Gerbeur selon la revendication 15, **caractérisé en ce que** le véhicule de stockage (12) est rattaché, en termes d'énergie et/ou de commande, au gerbeur (1).

17. Gerbeur selon l'une des revendications précédentes, **caractérisé en ce que** le véhicule de stockage (12) présente un dispositif support (26) réglable en hauteur, pour des rouleaux de papier (10) placés horizontalement.

18. Gerbeur selon la revendication 17, **caractérisé en ce que** le dispositif support (26) présente une surface support (27) à forme d'enveloppe cylindrique, par tronçons.

19. Gerbeur selon l'une des revendications précédentes, **caractérisé en ce que** le véhicule de stockage (12) présente des roues de déplacement (36), un entraînement de levage (24) pour le dispositif support (26), et un entraînement de déplacement, agissant sur au moins l'une des roues de déplacement (36).
